Europäisches Patentamt

European Patent Office

Office européen des brevets

(11) Veröffentlichungsnummer: **0 475 453 A2**

## EUROPÄISCHE PATENTANMELDUNG

(21) Anmeldenummer: **91115653.7**

(51) Int. Cl.⁵: **A01F 12/44**

(22) Anmeldetag: **13.09.91**

(30) Priorität: **13.09.90 DE 4028993**

(43) Veröffentlichungstag der Anmeldung:
**18.03.92 Patentblatt 92/12**

(84) Benannte Vertragsstaaten:
**DE ES FR GB IT**

(71) Anmelder: **Klöckner-Humboldt-Deutz AG**
**Otto Strasse 1**
**W-5000 Köln 90(DE)**

(72) Erfinder: **Liebers, ulrich**
**Alpenstrasse 18**
**W-4040 Neuss(DE)**
Erfinder: **von Allwörden, Wilhelm, Dipl.-Ing.**
**Alpenstrasse 18**
**W-7704 Gailingen(DE)**

(54) **Getreidereinigung im Mähdrescher.**

(57) Die Erfindung bezieht sich auf eine Vorrichtung für die Getreidereinigung in Mähdreschern.

Der Erfindung liegt die Aufgabe zugrunde, die Luftstrom-Beaufschlagung der Siebe im Siebrahmen zu optimieren durch eine bedarfsabhängige Beaufschlagung.

Gelöst wird die Aufgabe, indem der Gebläse-Luftstrom in mehrere Teilströme den Sieben im wesentlichen von unten verteilt zugeführt wird.

Fig.1

EP 0 475 453 A2

Die Erfindung betrifft eine Vorrichtung für die Reinigung des Getreides in Mähdreschern.

Im Reinigungsteil des Mähdreschers werden die ausgedroschenen Körner durch das Zusammenwirken von strömender Luft und der Trennwirkung von Sieben von unerwünschten Beimengungen, wie Spreu, Unkrautsamen und dergl. getrennt. Der durch ein Gebläse erzeugte Luftstrom bewirkt, daß die leichten, abzuscheidenden Bestandteile erfaßt werden, wobei das aufgelockerte, auf Sieben bewegte und frei herabfallende Reinigungsgut vom Luftstrom durchsetzt wird und die unerwünschten Beimengungen über die Siebflächen hinausgetragen werden, von wo sie auf den Acker fallen.

Bei heutigen Mähdreschern bewirkt das Gebläse einen Luftstrom, der im wesentlichen quer zur Fallrichtung des Getreidegutes im Reinigungsteil des Mähdreschers gerichtet ist. Das in Fahrtrichtung gesehen, stirnseitig vor den Sieben angeordnete Gebläse hat zur Folge, daß die Luftstrom-Beaufschlagung der Siebflächen nicht über die gesamte Siebfläche bedarfsabhängig erfolgt. Zur Verbesserung der Beaufschlagung sind sogenannte Luftleitklappen bzw. Umlenkbleche bekannt, mit denen der Querluftstrom örtlich zum Durchtritt durch die Siebe umgelenkt wird, ohne dabei eine gleichmäßige Luftstrom-Beaufschlagung der Siebflächen zu gewährleisten.

Als Aufgabe liegt der Erfindung zugrunde, die Luftstrom-Beaufschlagung der Siebe zu optimieren und dabei die jeweiligen Siebflächen-Abschnitte bedarfsabhängig mit Luftstrom zu beaufschlagen.

Gelöst wird die Aufgabe durch eine Aufteilung des vom Gebläse geförderten Luftstromes in mehrere Teilströme, wobei diese im wesentlichen verteilt auf die Unterseite der Siebe gerichtet sind. Vorteilhaft kann damit der jeweilige Siebflächenabschnitt bedarfsgerecht mit Luftstrom gezielt beaufschlagt werden. Damit ergibt sich beispielsweise ein durch Versuche ermittelter definierter Luftstrom, der auch im Feldeinsatz jederzeit realisierbar ist und folglich eine effektvolle, wenig Körnerverlust aufweisende Getreidereinigung darstellt.

Der Aufbau der erfindungsgemäßen Vorrichtung sieht einen dem Gebläse nachgeschalteten Stauraum vor, an dem Zuführkanäle angeschlossen sind, durch die jeweils ein Teilluftstrom den Sieben zugeführt wird. Beispielsweise ist die Vorrichtung darstellbar durch je ein beidseitig des Mähdreschers angeordnetes Gebläse, von dessen Stauraum die einzelnen Zuführkanäle ebenfalls auf der Mähdrescheraußenseite verlaufend angeordnet sind und die einzelnen Mündungen der Zuführkanäle auf verschiedene Abschnitte der Unterseiten der Siebe im Reinigungsteil des Mähdreschers ausgerichtet sind. Die Aufteilung des Luftstromes gestattet, daß dieser bevorzugt das obere Sieb beaufschlagt, auf das zunächst das gesamte Reinigungsgut gelangt und der verbleibende Luftstrom auf das Untersieb gerichtet ist.

Als Gebläse zur Erzeugung des Luftstromes bietet sich ein Axial- wie auch ein Radialgebläse an, das vorzugsweise regelbar ausgelegt ist, um damit den Luftmassenstrom bedarfsgerecht, z.B. an unterschiedliche Fruchtarten anpassen zu können. Vorzugsweise sind zwei Gebläse vorgesehen, die auf beiden Längsseiten des Mähdreschers in Fahrtrichtung gesehen angeordnet sind und die jeweils eine Hälfte der Siebflächen mit Luftstrom beaufschlagen. Bei Bedarf kann die Anzahl der Gebläse jedoch auch gesteigert werden.

In einer Ausgestaltung der Erfindung ist im Stauraum, der dem Gebläse nachgeschaltet ist, ein Stellorgan eingesetzt, mit dem die Luftstromzufuhr der Zuführkanäle beeinflußt werden kann. Dazu ist vorgesehen, daß die Zuführkanäle alternativ vom Luftstrom absperrbar sind, um so beispielsweise den Luftstrom gezielt bestimmten Bereichen der Siebflächen zuführen zu können. Vorzugsweise sind zwei Gebläse vorgesehen, die auf beiden Längsseiten des Mähdreschers in Fahrtrichtung gesehen angeordnet sind und die jeweils eine Hälfte der Siebflächen mit Luftstrom beaufschlagen. Bei Bedarf kann die Anzahl der Gebläse jedoch auch gesteigert werden.

Erfindungsgemäß ist das Stellorgan mit einem Stellantrieb koppelbar, der beispielsweise versehen mit einem Exzenter die Zuführkanäle intermittierend beaufschlagt, um so eine Steigerung des Reinigungseffektes zu erreichen, in dem das auf den Sieben befindliche Reinigungsgut periodisch vom Luftstrom durchsetzt und damit aufgelockert wird, um damit das Getreide von unerwünschten Beimengungen besser trennen zu können. Eine weitere Ausgestaltung sieht vor, den Stellantrieb drehzahlveränderlich auszulegen, durch den die einzelnen Beaufschlagungs-Zyklen der Zuführkanäle zeitlich veränderlich sind.

Die vorteilhaft an der Außenwand des Mähdreschers angebrachten Zuführkanäle sind erfindungsgemäß endseitig mit einer Düse versehen, durch die der austretende Luftstrom, angepaßt an den jeweiligen Abschnitt im Reinigungsteil des Mähdreschers, zielgerichtet zuströmen kann. Vorteilhaft sind die Düsen mit Leiteinrichtungen versehen, mit deren z.B. die Bedienungsperson manuell die Richtung und den Massenstrom beeinflussen kann.

Vorteilhaft gestattet die erfindungemäße Vorrichtung die Anordnung eines im Mähdrescher ortsfest angebrachten Siebrahmens, der keinerlei Schwing-Antrieb benötigt. Aufgrund der intermittierenden Beaufschlagung der Zuführkanäle in einer festen, vorgegebenen Reihenfolge stellt sich eine Förderwirkung des Reinigungsgutes auf den Sieben ein. Mit Hilfe des Stellorganes und des Stellantriebes wird erreicht, daß benachbarte Zuführkanäle nie gleichzeitig geöffnet sind, damit nur jeweils bestimmte Teilflächen der Siebe vom Luftstrom beaufschlagt werden. Durch diese Zuführung des Luftstromes wird das auf den Sieben befindliche Reinigungsgut örtlich aufgehoben und damit aufgelokkert, wobei die spezifisch leichten Bestandteile aufgrund der Austrittsrichtung der Düsen in den Zuführkanälen - deren Öffnung ist jeweils entgegen der Fahrtrichtung des Mähdreschers angeordnet - über die Siebflächen hinausgetragen werden, von wo sie auf den Acker fallen und das spezifisch schwerere Getreide durch die Sieböffnungen hindurchfällt. Nach Absperrung des Zufuhrkanals fällt das Reinigungsgut erneut auf die Siebe, von wo es nach Öffnung des benachbarten Zuführkanals wieder vom Luftstrom erfaßt wird und so durch eine Wiederholung des Vorgangs fortgesetzt über die gesamte Siebfläche in mehreren Zyklen eine wirkungsvolle Trennung des Getreides von unerwünschten Beimengungen erfolgt. Die ortsfeste Anordnung des Siebrahmens gestattet vorteilhaft eine unmittelbare Anbindung der Zuführkanäle am Siebrahmen bzw. an den Sieben unter Verzicht des sonst üblichen Schwing-Antriebs.

Als eine Alternative zu der starren Siebrahmen-Anordnung ist vorgesehen, die erfindungsgemäße Vorrichtung auch für herkömmliche Siebrahmen-Einbauten vorzusehen. Bekannte Schwing-Antriebe für Siebrahmen weisen in Gummi gelagerte Lenker auf, an die der Siebrahmen bewegbar aufgehängt ist und von einer Kurbel- oder Exzenterwelle über Pleuelstangen in Schwingungen versetzt wird. Der Schwing-Antrieb bewirkt eine nahezu horizontale Bewegung des Schwingrahmens in Richtung der Längsachse des Mähdreschers.

Zur Übertragung der erfinderischen Vorrichtung auf eine schwingende Siebrahmen-Anordnung ist vorgesehen, daß der Endbereich der Zuführkanäle einschließlich der Düsen der Schwingbewegung des Siebrahmens folgt. Konstruktiv ist dieser Aufbau beispielsweise durch elastische Zwischenglieder in den Zuführkanälen darstellbar.

Weiter bietet es sich an, die Zuführkanäle bei einem schwingenden Siebrahmen an den Außenwänden des Mähdreschers im Bereich des Reinigungsteils anzuordnen und teilweise die Endbereiche der Zuführkanäle unterhalb der Siebe in den Reinigungsteil ragen zu lassen zur Beaufschlagung der unteren Siebflächen mit einem Luftstrom.

Ein Ausführungsbeispiel der Erfindung ist in den Figuren dargestellt, die nachfolgend beschrieben werden.
Es zeigen:

Fig. 1 in einer Seitenansicht die wesentlichen Bauteile eines Mähdreschers einschließlich der erfindungsgemäßen Getreidereinigung,

Fig.2 in einer vergrößerten Darstellung in der Seitenansicht den Aufbau der erfindungsgemäßen Vorrichtung,

Fig. 3 in einer weitestgehend der Fig. 2 entsprechenden Darstellung, die Wirkungsweise der erfindungsgemäßen Vorrichtung.

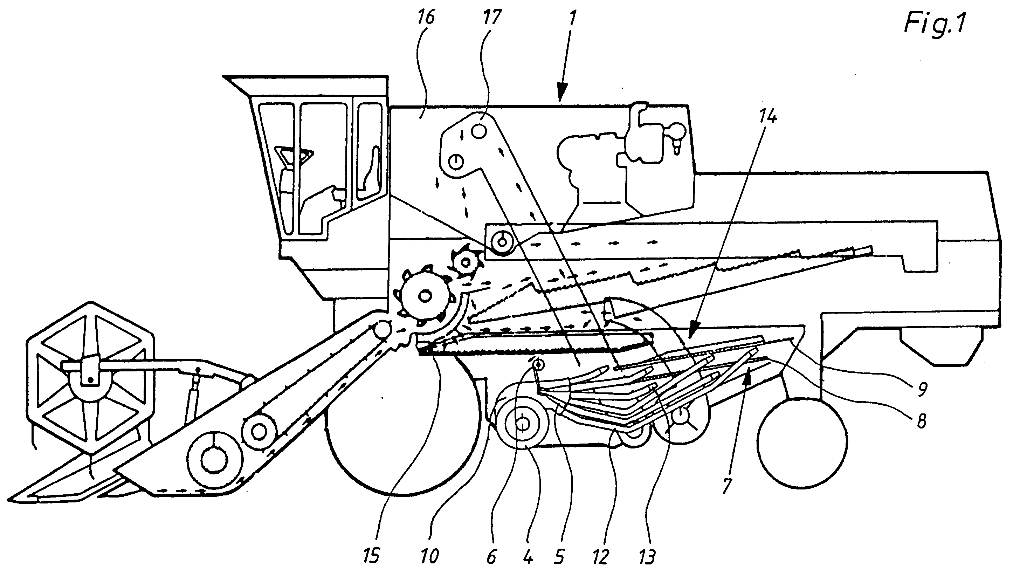

Der grundsätzliche Aufbau der erfindungsgemäßen Getreidereinigung 14, eingesetzt im Mähdrescher 1 ist der Fig. 1 zu entnehmen. Das unterhalb des Vorbereitungsbodens 15 angeordnete Gebläse 4 dient zur Erzeugung eines Luftstromes, mit dem unerwünschte Beimengungen, wie z.B. Spreu und Unkrautsamen oder dergl. vom Getreide getrennt werden. Dazu wird der vom Gebläse geförderte Luftstrom zunächst in einen Stauraum 10 gefördert, von dem aus eine Vielzahl von Zuführleitungen 12 den Luftstrom in verschiedene Bereiche des Siebrahmens 7 leitet. Zur gezielten Luftstrombeaufschlagung der Siebe 8 und 9 münden die Austrittsöffnungen der Zuführkanäle 12 in verschiedene Bereiche unterhalb der Siebe 8 und 9 des Siebrahmens 7. Zur Erreichung eines zielgerichteten Luftstromaustrittes aus den Zuführkanälen 12 sind diese jeweils mit einer Düse 13 versehen, mit der der Volumenstrom des austretenden Luftstromes beeinflußbar ist.

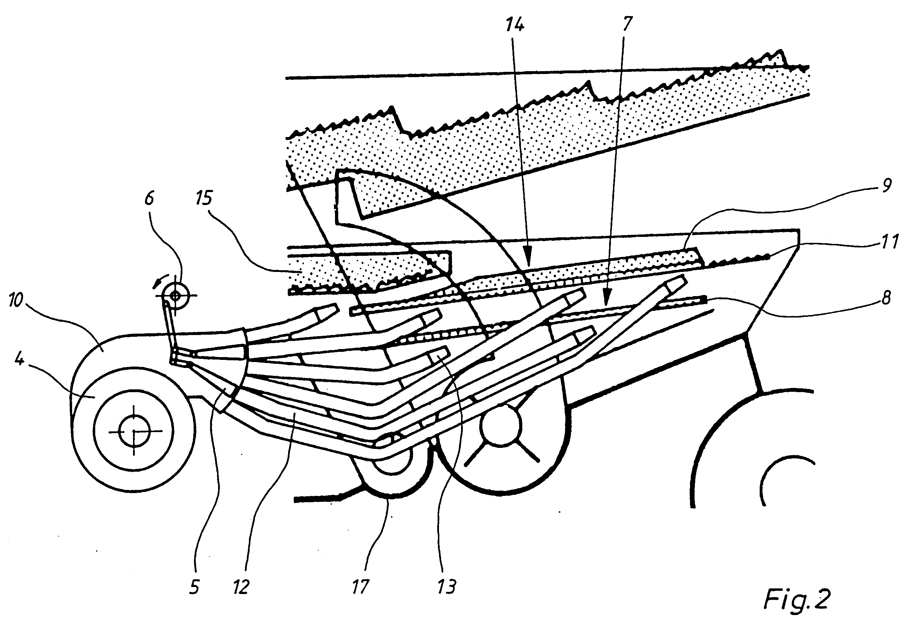

Durch ein Stellorgan 5, das mit einem Stellantrieb 6 gekoppelt ist, kann eine zyklische Beaufschlagung der Zuführkanäle erreicht werden. Wie in der vergrößerten Darstellung des Ausführungsbeispiels, der Fig. 2 entnehmbar, teilt sich der vom Gebläse 4 erzeugte Luftstrom in sechs Zuführkanäle 12 auf, wobei durch das Stellorgang 5 unterstützt durch einen Exzenter des Stellantriebs 6 je ein Zuführkanal 12 zum Sieb 8 (Untersieb) und zum Sieb 9 (Obersieb) geschlossen ist. Durch die erfindungsgemäße, periodische Luftstrombeaufschlagung der Siebe stellt sich eine Förderwirkung des zu reinigenden Getreides ein, da immer Teilbereiche der Siebfläche beaufschlagt werden und das auf den Sieben befindliche Gut je nach spezifischem Gewicht unterschiedlich angehoben wird und sich dabei die leichten von den schweren Bestandteilen trennen, d.h. Spreu und andere leichte Bestandteile des Reinigungsgutes in Richtung Ährenfang 11 gefördert werden und das Getreide durch die Siebe 8, 9 hindurchtritt und zum Körnerelevator 17 gelangt, der das gereinigte Getreide in den Getreidetank 16 fördert. Bei der erfindungsgemäßen Getreidereinigung kann auf eine schwingende Anordnung des Siebrahmens 7 verzichtet werden, da die gezielte Luftstromzuführung auf die Unterseite der Siebe 8, 9 neben der wirkungsvollen Reinigung auch eine Förderwirkung besitzt.

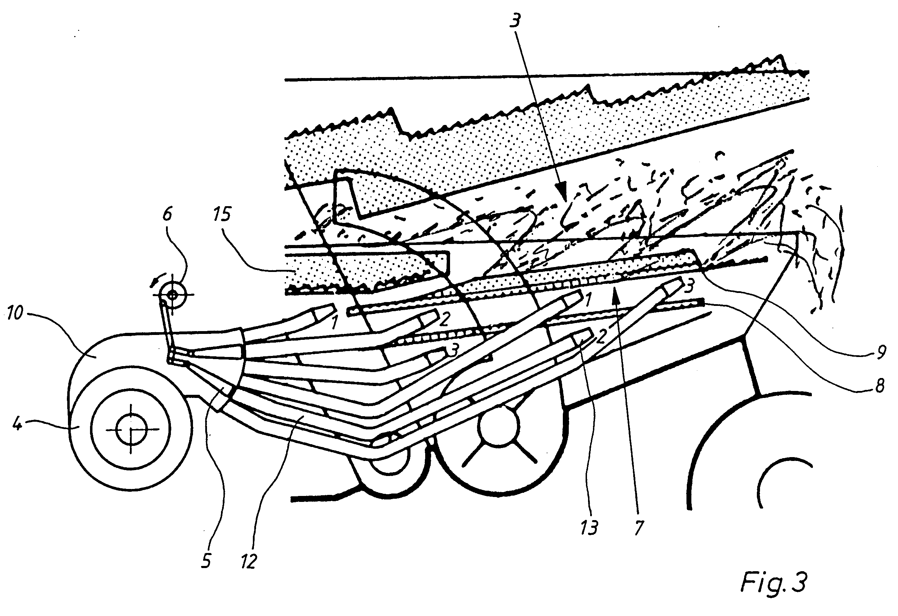

Durch die Fig. 3 wird die Wirkungsweise der erfindungsgemäßen Vorrichtung weiter verdeutlicht. Das vom Vorbereitungsboden 15 auf das Sieb 9 des Siebrahmens 7 geförderte Reinigungsgut 3, das im wesentlichen aus einem Korn-Spreu-Gemisch besteht, wird erfindungsgemäß durch den Luftstrom des Gebläses, der auf die Unterseite der Siebe 8, 9 gerichtet ist, beaufschlagt. Insbesondere die leichten Bestandteile des Reinigungsgutes 3 werden auf dem Sieb 9 dadurch hoch geworfen und bedingt durch die Schrägstellung der Düsen 13 zu den Sieben 8, 9 entsprechend der Förderrichtung des Vorbereitungsbodens 15 zum Ende des Siebrahmens 7 verlagert. Der zuvor beschriebene Reinigungs- und Fördereffekt wird erhöht durch eine zyklische Beaufschlagung der Zuführkanäle 12 mit dem vom Gebläse 4 geförderten Luftstrom, die mit Hilfe des Stellorgans 5 sowie des Stellantriebes 6 ermöglicht wird. Vorteilhaft werden die Zuführkanäle 12 paarweise abgesperrt - gemäß Fig. 3 sind die vom Stellorgan absperrbaren Zuführkanäle jeweils mit gleichen Ziffern versehen -,wodurch sich keine gleichzeitige Öffnung von zwei benachbarten Zuführkanälen 12 ergibt und damit sich ein ständiger Wechsel von beaufschlagten Siebbereichen einstellt. Die Darstellung in Fig. 3 zeigt weiter, wie das Reinigungsgut 3, insbesondere die leichten Bestandteile, auf dem Sieb 9 in verschiedenen Zyklen im Bereich der geöffneten Zuführkanäle 12 hochgeworfen wird und nach Absperrung des Zuführkanals wieder auf das Sieb gelangt. Dieser Vorgang wiederholt sich periodisch, wobei gleichzeitig eine Verlagerung des Reinigungsgutes 3 vom vorderen zum hinteren Bereich des Siebrahmens 7 erfolgt, unterstützt durch die Schrägstellung der Düsen 13 zu den Sieben 8, 9.

**Patentansprüche**

1. Vorrichtung für die Getreidereinigung im Reinigungsteil des Mähdreschers, deren Aufbau zumindest ein Gebläse und einen Siebrahmen mit Sieben umfaßt, wobei das Reinigungsgut von einem Vorbereitungsboden auf das obere Sieb des Siebrahmens gelangt und im Reinigungsteil eine Trennung des Getreides von unerwünschten Beimengungen, wie z.B. Spreu, Unkrautsamen oder dergl. erfolgt, und dabei die Siebe mit Abstand im wesentlichen parallel zueinander in Fahrtrichtung des Mähdreschers, vorzugsweise nach vorn geneigt eingebaut sind und der vom Gebläse erzeugte Luftstrom durch Luftleiteinrichtungen beeinflußt den Sieben zugeführt wird, dadurch gekennzeichnet, daß der Luftstrom des Gebläses (4) in mehrere Teilströme aufgeteilt ist, durch die der Luftstrom den Sieben (8, 9) im wesentlichen von unten verteilt zuströmt.

2. Vorrichtung nach Anspruch 1, dadurch gekennzeichnet, daß der vom Gebläse (4) geförderte Luftstrom zunächst in einen Stauraum (7) gelangt, an dem Zuführkanäle (12) angeschlossen sind.

3. Vorrichtung nach einem der vorhergehenden Ansprüche, dadurch gekennzeichnet, daß ein regelbares Gebläse (4) vorgesehen ist.

4. Vorrichtung nach einem der vorhergehenden Ansprüche, dadurch gekennzeichnet, daß auf beiden Längsseiten in Fahrtrichtung des Mähdreschers gesehen je ein Gebläse (4) vorgesehen ist.

5. Vorrichtung nach einem der vorhergehenden Ansprüche, dadurch gekennzeichnet, daß im Stauraum (7) ein Stellorgan (5) eingesetzt ist.

6. Vorrichtung nach einem der vorhergehenden Ansprüche, dadurch gekennzeichnet, daß durch das Stellorgan (5) die Beaufschlagung der Zuführkanäle (12) beeinflußbar ist.

7. Vorrichtung nach einem der vorhergehenden Ansprüche, dadurch gekennzeichnet, daß über das Stellorgan (5) Zuführkanäle (12) alternativ vom Luftstrom absperrbar sind.

8. Vorrichtung nach einem der vorhergehenden Ansprüche, dadurch gekennzeichnet, daß ein drehzahlveränderlicher, mit einem Exzenter versehener Stellantrieb (6) zur intermittierenden Betätigung des Stellorgans (5) vorgesehen ist.

9. Vorrichtung nach einem der vorhergehenden Ansprüche, dadurch gekennzeichnet, daß die Zuführkanäle (12) jeweils endseitig mit einer Düse (13) versehen sind.

10. Vorrichtung nach den Ansprüchen 1 bis 9, dadurch gekennzeichnet, daß der Siebrahmen (7) ortsfest im Mähdrescher (1) befestigt ist.

11. Vorrichtung nach Anspruch 10, dadurch gekennzeichnet, daß die Zuführkanäle (12) mit dem Siebrahmen (7) bzw. den Sieben (8, 9) verbunden sind.

12. Vorrichtung nach den Ansprüchen 1 bis 9, dadurch gekennzeichnet, daß der Siebrahmen (7) mit einem Schwing-Antrieb versehen ist.

**13.** Vorrichtung nach Anspruch 12,
dadurch gekennzeichnet, daß der Endbereich der Zuführkanäle (12) einschließlich der Düsen (13) der Schwingbewegung des Siebrahmens (7) folgt.

**14.** Vorrichtung nach Anspruch 12,
dadurch gekennzeichnet, daß die Zuführkanäle (12) in Fahrtrichtung gesehen, seitlich an den Außenwänden des Mähdreschers (1) außerhalb des Siebrahmens (7) angeordnet sind und teilweise am Austrittsende einen zur Siebrahmenmitte zeigenden Endbereich aufweisen.

Fig.1

EP 0 475 453 A2

Fig.2

Fig. 3